# EUROPEAN PATENT APPLICATION

(11) **EP 2 239 622 A1**
(43) Date of publication of application: **13.10.2010**
(21) Application number: 08872166.7
(22) Date of filing: 17.12.2008
(51) Int. Cl.: G02F 1/1333, G02F 1/13363, G02F 1/1345, G02F 1/1347, G06F 3/041

(54) **LIQUID CRYSTAL DISPLAY ELEMENT**

(30) Priority: 06.02.2008 JP 2008026762
(71) Applicant: Hosiden Corporation, Yao-shi, Osaka 581-0071 (JP)
(72) Inventor: EMA, Hiroshi, Yao-shi Osaka 581-0071 (JP); SEYAMA, Shuichi, Yao-shi Osaka 581-0071 (JP); TAKEHARA, Naoya, Yao-shi Osaka 581-0071 (JP); NAKAGAWA, Hiroshi, Yao-shi Osaka 581-0071 (JP); SHIMIZU, Masato, Yao-shi Osaka 581-0071 (JP)
(74) Representative: Beresford, Keith Denis Lewis
(86) International application number: PCT/JP2008/072908
(87) International publication number: WO 2009/098823

(57) **Abstract**

The present invention aims to achieve a high display quality and cost saving while providing a dual function as a capacitive touch panel.

A liquid crystal display unit 1 has a liquid crystal display cell 10; and a compensation cell 20, disposed opposite the liquid crystal display cell 11 to improve an optical characteristic of the liquid crystal display cell 10. The compensation cell has a transparent plate 21/22, and a transparent electrode group 28 for a capacitive touch panel. The transparent electrode group 28 is formed at the transparent plate 21/22 to allow the compensation cell 20 to function also as the touch panel.

## Description

### TECHNICAL FIELD

The present invention relates to a liquid crystal display unit having a dual function as a liquid crystal module and a touch panel.

### BACKGROUND ART

A conventional unit of this kind has a liquid crystal (LC) display panel and a LC color tone correction panel disposed opposite the LC display panel, the color tone correcting liquid crystal panel also functioning as a resistive touch panel.

In the LC color tone correction panel, two glass plates are opposed to each other with a spacer interposed therebetween, and liquid crystal is sealed between the two glass plates. Onto the opposing inner surfaces of the two glass plates, there are affixed transparent conductive films to serve as movable electrodes and stationary electrodes of the touch panel.

When the LC color tone correction panel is pressed with a finger on its surface, the pressure deforms a glass plate of the panel, bringing a movable electrode into contact with a stationary electrode locally. The pressed location on the surface of the LC color tone correction panel can be detected by measuring the partial pressure ratio produced by the resistances of the movable and stationary electrodes (see, e.g., Patent Document 1).

Patent Document 1: Japanese Unexamined Patent Publication No. 03-011514

### DISCLOSURE OF THE INVENTION

### PROBLEMS TO BE SOLVED BY THE INVENTION

The above display unit has an intrinsic drawback. Particularly, when the LC color tone correction panel is pressed with a finger on its surface, the glass plate is deformed with the spacer. Then, the glass plate partly becomes thinner, which causes disruption in optical compensation given by the LC color tone correction panel, leading to a serious degradation in display quality. In addition, the gap width between the two glass plates is typically on the order of several micrometers, which brings about another problem that the gap-keeping spacer is prone to permanent deformation due to aged deterioration, resulting in low durability. The conventional display unit will not be commercially viable unless the above problems are overcome.

The present invention was made against the aforementioned backdrop. It is an object of the invention to provide a liquid crystal display unit capable of providing a high display quality.

### MEANS FOR SOLVING THE PROBLEMS

To overcome the above problems, a liquid crystal display unit according to the present invention includes a liquid crystal display cell; and a compensation cell, disposed opposite the liquid crystal display cell to improve an optical characteristic of the liquid crystal display cell. The compensation cell includes a transparent plate; and a transparent electrode group for a capacitive touch panel, the transparent electrode group being formed at the transparent plate to allow the compensation cell to function also as the touch panel.

According to the present invention, upon the touch of a finger on a surface of the transparent plate of the compensation cell, a capacitor is formed between the compensation cell and the finger. A capacitance change in the capacitor is outputted through the transparent electrode group, allowing detection of the position touched with the finger. As such, the compensation cell not only enhances optical characteristics of the liquid crystal display cell but also functions as a touch panel, whereby the liquid crystal display unit can be improved in display quality with reduced cost.

The transparent plate may include an upper transparent plate and a lower transparent plate, and the compensation cell further including a liquid crystal sealed between the upper and lower transparent plates. In this case, the transparent electrode group may be arranged on opposing inner surfaces of the upper and lower transparent plates.

If the above compensation cell is used, the liquid crystal preferably contains up to 1 percent of antistatic agent, which may include quaternary amine.

In this case, antistatic agent contained in the liquid crystal inside the compensation cell lowers the specific resistance of the liquid crystal, so that the liquid crystal can dissipate static electricity charged on the transparent plates of the compensation cell. As a result, the liquid crystal hardly operates erroneously due to static electricity. Moreover, the content of the antistatic agent is set such that it neither causes any adverse affect on the viscosity of the liquid crystal nor invites degradation thereof. Accordingly, the liquid crystal display unit can be even further improved in display quality in this respect.

If the above compensation cell is used, a rubbing treatment may preferably be performed on each of the upper and lower transparent plates to align molecular orientations of the liquid crystal.

In this case where the upper and lower transparent plates are subjected to rubbing treatment, the molecular axes of the liquid crystal are aligned unidirectionally, and thus the liquid crystal hardly operates erroneously due to static electricity, even when static is charged in the transparent plates of the compensation cell. The liquid crystal display unit can be even further improved in display quality in this respect.

The transparent electrode group may preferably include an upper transparent electrode group; an upper routing wire group, provided in the vicinity of the upper transparent electrode group and connected to the upper transparent electrode group; a lower transparent electrode group; and a lower routing wire group, provided in the vicinity of the lower transparent electrode group and connected to the lower transparent electrode group.

In this transparent electrode group, it is preferable that the upper and/or lower routing wire groups are adjusted such that a routing wire of the routing wire groups is, irrespective of the length of the routing wire, approximately equal in resistance value to another routing wire.

In this case, it possible to equalize the resistance values of the upper and/or lower routing wire groups, irrespective of how the constituent routing wires are routed. Therefore, the resistance values of the wire groups are equalized, which eliminates variation in detection accuracy of the finger positions. In addition, increased flexibility in the layout of the upper and lower routing wire groups can prevent display electrodes in the liquid crystal display cell from overlapping each other, contributing to increased transmittance of the liquid crystal display cell.

Preferably, the upper and lower transparent electrode groups may include transparent conductive films, formed at the transparent plate. The upper and lower routing wire groups may include transparent conductive films, formed at the transparent plate, and metal films, laid on the transparent conductive films and providing a lower resistance than the transparent conductive films.

In this case, the transparent conductive films and the metal films for the upper and lower routing wire groups are connected in parallel, so that the upper and lower routing wire groups become lower in resistance value than the transparent conductive films. That is, the resistance values of the transparent electrode groups become low, which eliminates deterioration in detection accuracy of finger positions to be caused by the resistance of the transparent electrode groups. Thus, the liquid crystal display unit can be even further improved in performance in this respect.

In the case where the liquid crystal display cell includes a display electrode group arrayed in a grid pattern, the upper transparent electrode group and the lower transparent electrode group may each be arrayed into stripes. The upper transparent electrode group may be disposed orthogonally to the lower transparent electrode group in their planar positional relationship.

In the case of using the above upper and lower transparent electrode groups, it is preferable that upper transparent electrodes of the upper transparent electrode group and lower transparent electrodes of the lower transparent electrode group each include upper detection electrodes and lower detection electrodes, respectively, each detection electrode having a rectangular shape. The upper detection electrodes may be disposed to the number corresponding to the lower transparent electrodes of the lower transparent electrode group and spaced apart with a pitch corresponding to the lower transparent electrodes. The lower detection electrodes may be disposed to the number corresponding to the upper transparent electrodes of the upper transparent electrode group and spaced apart with a pitch corresponding to the upper transparent electrodes. Diagonals of the upper and lower detection electrodes may be directed in the same direction as the array direction of the upper transparent electrode group or the lower transparent electrode group, and the upper and lower detection electrodes may be sized so as not to overlap with one another.

In this case where the upper and lower detection electrodes are provided in the upper and lower transparent electrode groups, the electrode area of the capacitor is enlarged, thereby increasing the capacitance of the capacitor. Hence, detection accuracy of finger positions can be improved, and the liquid crystal display unit can be even further improved in performance in this respect.

In the case of using the above upper and lower transparent electrode groups, the upper and lower transparent electrode groups may preferably be arranged not parallel to but at an angle to the display electrode group in the liquid crystal display cell in their mutual planar positional relationship.

In this case, pixels of the liquid crystal display cell are arrayed into a grid pattern while the upper and lower transparent electrode groups in the compensation cell are also arrayed into a grid pattern, wherein the display electrode groups in the liquid crystal display cell are arranged at an angle relative to the upper and lower transparent electrode groups; thus, an interference such as diffraction is suppressed during passage of light therethrough, and the liquid crystal display unit can be even further improved in display quality in this respect.

It is preferable that a plurality of transparent electrode groups is arranged in a grid pattern.

In this case, light passes through gaps between adjacent transparent electrode groups, so that light transmittance can be improved and the transparent electrode groups become inconspicuous, contributing to further improvement in display quality of the liquid crystal display unit.

### BRIEF DESCRIPTION OF THE DRAWINGS

FIGS. 1A and 1B illustrates an embodiment of a liquid crystal display (LCD) unit according to the present invention, wherein FIG. 1A is a schematic cross-sectional view of a LCD cell and a compensation cell that constitute the LCD unit and FIG. 1B is a schematic cross-sectional view of the LCD cell.
FIG. 2 is a schematic plan view showing a positional relationship between a display electrode group provided in the LCD cell and a transparent electrode group provided in the compensation cell.
FIG. 3 is a schematic plan view showing some of transparent electrode groups provided in the compensation cell.
FIG. 4 is a partial plan view showing one of the transparent electrode groups in detail.
FIGS. 5A and 5B illustrate the interior of a transparent electrode group, wherein FIG. 5A is a schematic cross-sectional view of a portion indicated as "A" in FIG. 4, and FIG. 5B is an equivalent resistor circuit diagram of an upper transparent electrode and an upper routing wire.
FIG. 6 is a schematic plan view for describing a modification of the transparent electrode groups.

### DESCRIPTION OF REFERENCE NUMERALS

1 LCD unit
   10 LCD cell
   11, 12 display glass plate
   13 adhesive
   14 gap agent
   15 display electrode group
   16 alignment film
   17 polarizing plate
   18 liquid crystal
20 compensation cell
   21 compensation glass plate (upper transparent plate)
   22 compensation glass plate (lower transparent plate)
   23, 24 adhesive
   25 gap agent
   26 liquid crystal
   27 antistatic agent
   28 transparent electrode group
      281X/281Y upper/lower transparent electrode
         2811X/2811Y upper/lower detection electrode
      282X/282Y upper/lower routing wire
      281a transparent electrode film
      281b metal film

### BEST MODE FOR CARRYING OUT THE INVENTION

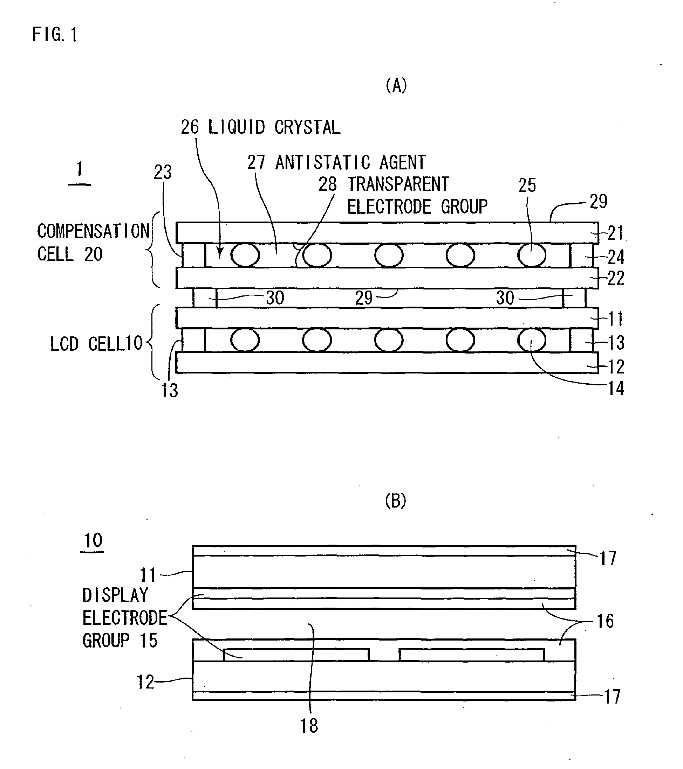

Embodiments of a liquid crystal display (LCD) unit according to the present invention are described below with reference to the drawings. FIG. 1A is a schematic cross-sectional view of a liquid crystal display (LCD) unit 1. Reference to the above description of reference numerals will clarify correspondences between components of the LCD unit and claimed elements of the invention recited in the claims.

The LCD unit 1 illustrated herein includes a LCD cell 10 of Double layer Super Twisted Nematic (DSTN) type and a compensation cell 20 disposed opposite the LCD cell 10 to correct phase shifts in the light passing through the LCD cell 10. The compensation cell 20 not only improves optical characteristics of the LCD cell 10 as described above but also functions as a capacitive touch panel. Each of the components is described in detail below.

The LCD unit 1 is of transmissive type. The drawings do not illustrate light source, such as a cold-cathode tube, disposed on the rear side of the LCD cell 10.

FIG. 1B is a schematic cross-sectional view of the LCD cell 10. As shown in FIG. 1B, the LCD cell 10 is structured such that liquid crystal 18 is sealed between a display glass plate 11 and another display glass plate 12. A display electrode group 15 is provided on the opposing inner surfaces of the display glass plates 11 and 12 so as to apply voltage to the liquid crystal 18. The display electrode group 15 is constituted of transparent electrode films of indium-tin-oxide (ITO) or the like, which are arrayed into a grid pattern.

In FIG. 1A, reference numeral 13 denotes adhesive and 14 denotes gap agent in the form of beads, whilst in FIG. 1B, reference numeral 16 denotes alignment films and 17 denotes polarizing plates.

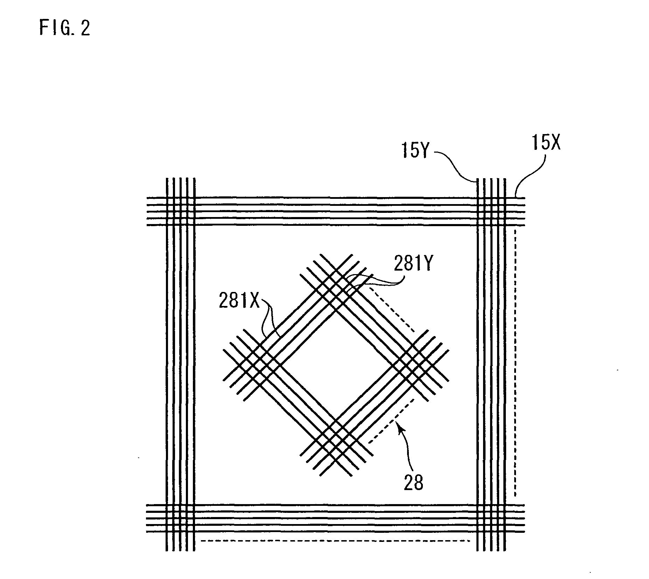

FIG. 2 is a schematic plan view of one of the display electrode group 15 provided in the LCD cell 10. The display electrode group 15 consists of an electrode group 15X extending in a direction (a horizontal direction in the figure) and an electrode group 15Y extending in another direction (a vertical direction in the figure). It should be noted that FIG. 2 does not illustrate the actual number, routing, etc. of electrodes of the display electrode group 15 and does not show electrodes in the central portion of the display electrode group 15.

As shown in FIG. 1A, the compensation cell 20 is structured such that liquid crystal 26 is sealed between a compensation glass plate 21 and another compensation glass plate 22. Transparent electrode groups 28 are disposed on the respective opposing inner surfaces of the compensation glass plates 21 and 22. The compensation cell 20 is adhesively bonded on the front side of the LCD cell 10 using pressure-sensitive adhesive 30.

The liquid crystal 26 used here is a common liquid crystal material such as ZLI-4431 available from Merck Ltd. In order to prevent erroneous operation due to static electricity during operation on the touch panel, the liquid crystal 26 contains antistatic agent 27, such as a quaternary amine, for lowering the specific resistance.

The content of the antistatic agent 27 in the liquid crystal 26 is desirably about 10 ppm to 1%. The content should allow leak of static charged on a surface of the compensation glass plate 21 to such a degree that the static shall not be problematic, and the content should also avoid any adverse effect on the viscosity or quality of the liquid crystal 26 itself. Although the material for the liquid crystal 26 may be selected from a wide range of materials, the basic structure thereof are substantially common. The content of about 1% or less should therefore be sufficient.

The outer surfaces of the compensation glass plates 21 and 22 are applied with polyimide alignment films 29. The polyimide alignment films 29 are subjected to rubbing treatment, by rubbing surfaces of films in a fixed direction using a cloth such as velvet. This treatment is to align the molecular orientations of the liquid crystal 26 and to protect the liquid crystal 26 from being disturbed by static electricity during operation on the touch panel.

FIG. 1A shows adhesive 23 and 24 for fixing the compensation glass plates 21 and 22 to each other and confining the liquid crystal 26 and the like therebetween. FIG. 1A also shows gap agent 25 in the form of beads, which regulates the gap between the compensation glass plates 21 and 22.

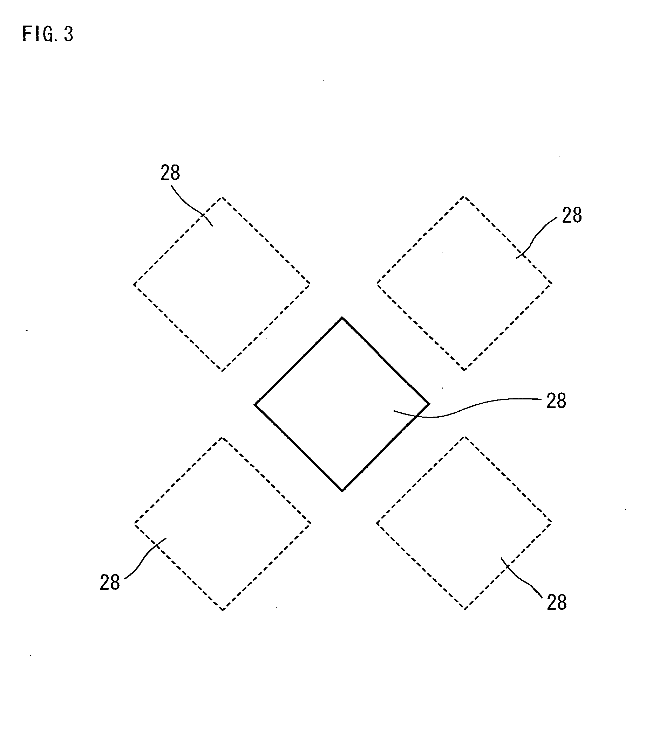

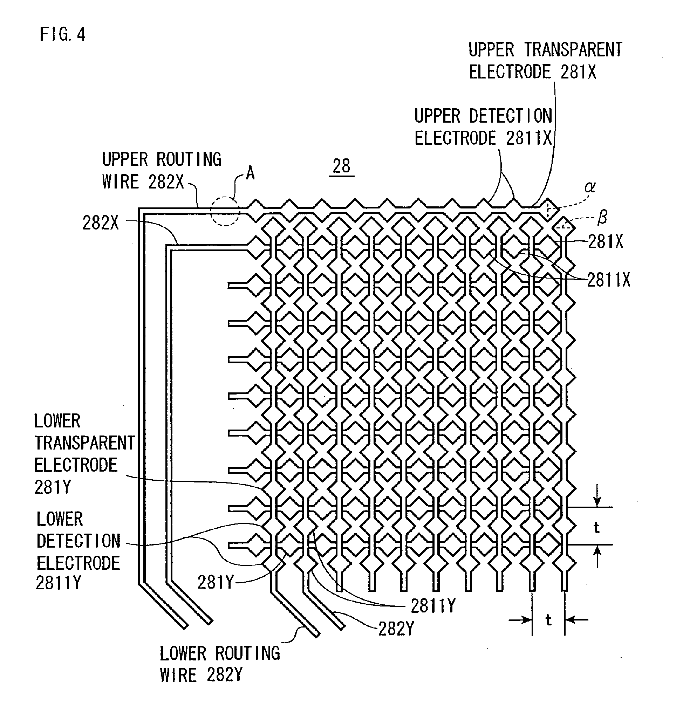

FIG. 3 is a schematic plan view showing some of the transparent electrode groups 28 provided on the compensation glass plates 21 and 22, and FIG. 4 is a plan view showing one of the transparent electrode groups 28 in detail. FIG. 3 illustrates only adjacent five of the transparent electrode groups 28. FIG. 4 may not accurately illustrate the routing, etc. of the transparent electrode group.

The transparent electrode groups 28, including ones not shown, are arranged on the compensation glass plates 21 and 22 to form a grid pattern. Each of the transparent electrode groups 28 takes a grid-like structure, i.e. has a wiring pattern as shown in Fig. 4.

Specifically, as shown in FIG. 4, transparent electrode groups 28 each include upper transparent electrodes 281X that constitute an upper transparent electrode group and are provided on the lower surface of the compensation glass plate 21, upper routing wires 282X that constitute an upper routing wire group and are formed in the vicinity of the upper transparent electrodes 281X to be connected thereto, lower transparent electrodes 281Y that constitute a lower transparent electrode group and are provided on the upper surface of the compensation glass plate 22, and lower routing wires 282Y that constitute a lower routing wire group and are formed in the vicinity of the lower transparent electrodes 281Y to be connected thereto.

The upper transparent electrodes 281X and the lower transparent electrodes 281Y both have a stripe arrangement with a pitch "t" (in the present embodiment, "t" is ten times as long as the pitch distance of the display electrode group 15). The upper transparent electrodes 281X are disposed orthogonally to the lower transparent electrodes 281Y in their planar positional relationship.

The display electrode groups 15X and 15Y of the LCD cell 10 are arrayed to form a grid pattern as described above. Their planar positions in relation to the upper and lower transparent electrodes 281X and 281Y of the compensation cell 20 are as shown in FIG. 2.

That is, the upper transparent electrodes 281X constituting the upper transparent electrode group and the lower transparent electrodes 281Y constituting the lower transparent electrode group of the compensation cell 20 are disposed not parallel to but at an angle to the display electrode group 15 of the LCD cell 10 in their mutual planar positional relationship.

If it was so designed that the display electrode groups 15X and 15Y of the LCD cell 10 are disposed parallel in planar positions to, i.e., has the same positional relationship as, the upper and lower transparent electrode groups of the compensation cell 20, a misalignment and the like in affixing the LCD cell 10 to the compensation cell 20 would cause an interference such as diffraction in the light passing through the compensation cell 20. To avoid this problem, the upper and lower transparent electrode groups of the compensation cell 20 are designed so as to establish a positional relationship as described above. Note that the upper and lower electrode groups may be disposed at any angle relative to the display electrode group 15 of the LCD cell 10; that is, the upper and lower transparent electrode groups are only required not to have the same planer position in relation to the display electrode group 15 of the LCD cell 10.

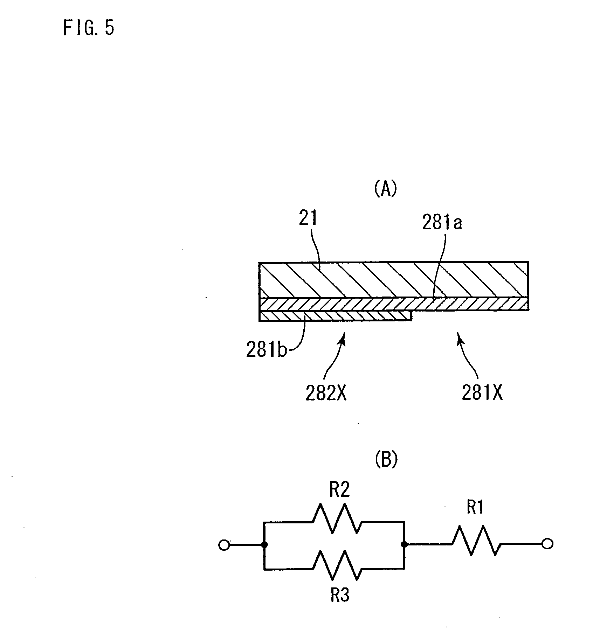

A description is made below on the internal structure of each transparent electrode group 28. FIG. 5A is a schematic cross-sectional view of a portion indicated as "A" in FIG. 4 of the compensation glass plate 21. Particularly, the upper transparent electrode 281X and the upper routing wire 282X are both formed based on a transparent conductive film 281a formed on the compensation glass plate 21. A Metal film 281b, which is lower in resistance than the transparent conductive film 281a, is laid only on the portion of transparent conductive film 281a used for the upper routing wire 282X. The other upper transparent electrodes 281X and other upper routing wires 282X have the same structure as the above.

In the present embodiment, an indium-tin-oxide (ITO) is used as the material of the transparent conductive films 281a. As the sheet resistance of the ITOs is about 100 Ω, the metal films 281b are made of Ni, Ag, Al, Mo/Cr, or other material that is lower in resistance than ITOs. If an ITO with low sheet resistance is used, the transparent conductive films become thick, which significantly lowers their transparency. For this reason, it is effective to coat an inorganic film over the ITO in suppressing sheet resistance of the ITO as well as in ensuring transparency. In this case, the sheet resistance of the ITO may be appropriately set in consideration of the inorganic film.

Specifically, fabrication may be implemented, for example, in such a way that the transparent conductive films 281a are formed on the portions for the upper transparent electrodes 281X and the upper routing wires 282X, and then the metal films 281b may be formed on the portions for the upper routing wires 282X by means of electroless nickel plating or silver paste printing, etc. Alternatively, it is also possible to form the transparent conductive films 281a and metal films subsequently on the portions for the upper transparent electrodes 281X and the upper routing wires 282X, and then to selectively perform etching to form the metal films 281b for the upper routing wires 282X.

FIG. 5B shows an equivalent resistor circuit of an upper transparent electrode 281X and an upper routing wire 282X. R1 is a resistance of the transparent conductive film 281a on the portion for the upper transparent electrode 281X. R2 and R3 are resistances of the transparent conductive film 281a and the metal film 281b, respectively, in the portion for the upper routing wire 282X. The relationship of R2 > R3 is established as described above. Thus, the resistance value of either the upper transparent electrode 281X or the upper routing wire 282X is smaller than the resistance value of the transparent conductive film 281a alone without the metal film 281b.

The same goes for other upper transparent electrodes 281X and upper routing wires 282X, except the lengths of the upper routing wires 282X. Further, the lower transparent electrodes 281Y and the lower routing wires 282Y are configured in the same manner as the upper transparent electrodes 281X and the upper routing wires 282X.

As described above, although the transparent electrode groups 28 are basically formed of the transparent conductive films 281a that are made of a relatively highly resistant material among conductive materials, the partly overlapping metal films 281b reduces the overall resistance as compared with that of the ITO. Such improvement is made on the ground that a higher wiring resistance tends to have an adverse effect of worsening finger positions in a capacitive touch panel. Further, the metal films 281b are formed only in the portions for the upper and lower routing wires 282X and 282Y in order not to lower the transmittance of the compensation cell 20 due to the transparent electrode groups 28.

As shown in FIG. 4, the upper transparent electrodes 281X each include equally spaced, rectangular upper detection electrodes 2811X. The lower transparent electrodes 281Y similarly each include lower detection electrodes 2811Y like the upper detection electrodes 2811X. The upper detection electrodes 2811X are disposed to the number (exemplified as ten in the figure) corresponding to the number of the lower transparent electrodes 281Y and at positions separated from one another by the pitch distance "t" corresponding to the pitch of the lower transparent electrodes 281Y.

The diagonals α of the upper detection electrodes 2811X and the diagonals β of the lower detection electrodes 2811Y are oriented in the same directions as the lower transparent electrodes 281Y and the upper transparent electrodes 281X, respectively. The respective dimensions (the lengths of the diagonals) of the upper and lower detection electrodes 2811X and 2811Y are set so that the detection electrodes will not overlap with one another.

The above-described arrangements of the upper and lower detection electrodes 2811X and 2811Y in the upper and lower transparent electrodes 281X and 281Y allow increase of electrode areas for a capacitor to be produced, resulting in improved accuracy in detecting finger positions.

The upper routing wires 282X are drawn out of one of the two respective ends of the upper transparent electrodes 281X. Similarly, the lower routing wires 282Y are drawn out of one of the two respective ends of the lower transparent electrodes 281Y. These routing arrangements are made in view of the positions, etc. of detection signal output terminals (not shown) provided at edge portions in the surface of the compensation glass plates 21 and 22.

In this arrangement of the upper routing wires 282X and the lower routing wires 282Y drawn out of one ends of the upper and lower transparent electrodes 281X and 281Y, respectively, some of the upper and lower routing wires 282X and 282Y may be substantially longer the others. Then, their resistance values vary greatly, which is a main factor for variation in detection accuracy of finger positions.

To address this problem, in the upper routing wire group, some of the constituent upper routing wires 282X are adjusted to provide the same resistance value, irrespective of their lengths, as the other upper routing wires 282X. That is, the resistance values of all the upper routing wires 282X are tuned into a constant value irrespective of the lengths of the routing wires. This holds true for the lower routing wire group.

Specific tuning methods of the resistance values of the upper and lower routing wires 282X and 282Y include changing the routing pattern and directly adjusting the length of each wire. Alternative tuning methods are to fine-adjust the materials, widths, or thicknesses of the transparent conductive films 281a, the metal films 281b, etc., or to fine-adjust the lengths of the metal films 281b.

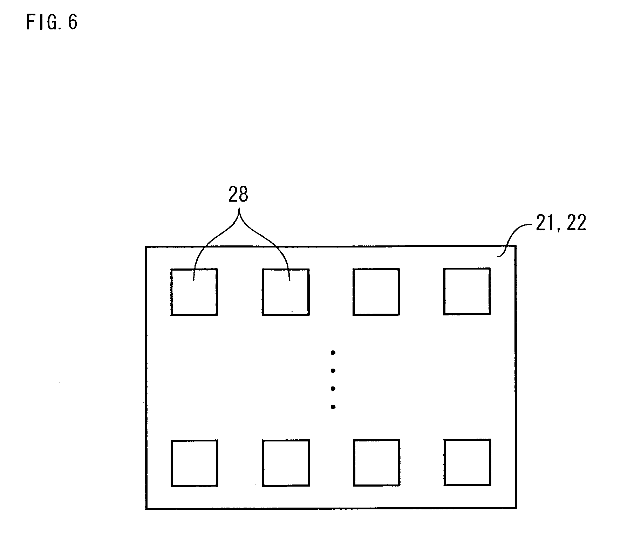

As a result, the resistance values in the transparent electrode groups 28 can be easily made constant irrespective of the lengths of the upper and lower routing wires 282X and 282Y. Therefore, the upper and lower routing wires 282X and 282Y have a higher flexibility in designing their pattern layout, avoiding overlapping with the display electrode group 15 in the LCD cell 10, and can be enhanced in transmittance. Moreover, as light passes through gaps between adjacent transparent electrode groups of the transparent electrode groups 28, the light transmittance can be increased accordingly. It should be noted that the same effects can be obtained from modified configuration, such as one shown in FIG. 6, insofar as the transparent electrode groups 28 are arrayed in a grid pattern on the compensation glass plates 21 and 22.

In the LCD unit 1 configured as above, upon the touch of a finger on a surface of the compensation glass plate 21 of the compensation cell 20, with the transparent electrode groups 28 in the compensation cell 20 connected to a capacitance detection circuit (not shown), a capacitor is formed between the associated transparent electrode group 28 and the finger. A capacitance change in the capacitor is outputted to the circuit through the associated transparent electrode group 28. As a result, the circuit can detect the position that is touched with the finger.

The compensation cell 20 not also improves optical characteristics of the LCD cell 10 but also functions as a touch panel, thereby obviating the separate preparation of a touch panel, reducing costs accordingly. In addition, the compensation cell 20 has advantageously high detection accuracy of finger positions and high transmittance and is hardly affected by static electricity as described above, thus maintaining a high display quality and providing high performance.

It should be noted that the LCD unit according to the present invention is not limited to the foregoing embodiments and may be modified as follows.

The LCD cell is also applicable to a display of STN (Super-Twisted Nematic) type or CSTN (Color Super-Twist Nematic) type, or even to a display of reflective type.

The compensation cell may have any structure so far as the compensation cell is disposed opposite the LCD cell for improving optical characteristics of the LCD cell. Also, the compensation cell may have a function as a heater in addition to the touch panel function. Further, the transparent plates may be provided not only with transparent electrode groups but also with circuits or other components required for a touch panel.

Film substrates may be used for the transparent plates of the compensation cell. The transparent conductive films of the transparent electrode groups may be made of tin oxide, zinc oxide, conductive polymer, or other materials. The shapes of the transparent electrode groups including the detection electrodes may be suitably changed according to the position of a switch, the shape etc. of the display electrode group of the LCD cell.

## Claims

1. A liquid crystal display unit comprising:
a liquid crystal display cell; and
a compensation cell, disposed opposite the liquid crystal display cell to improve an optical characteristic of the liquid crystal display cell,
the compensation cell including:
a transparent plate; and
a transparent electrode group for a capacitive touch panel, the transparent electrode group being formed at the transparent plate to allow the compensation cell to function also as the touch panel.

2. The liquid crystal display unit according to claim 1,
the transparent plate including an upper transparent plate and a lower transparent plate,
the compensation cell further including a liquid crystal sealed between the upper and lower transparent plates, wherein the transparent electrode group is arranged on opposing inner surfaces of the upper and lower transparent plates.

3. The liquid crystal display unit according to claim 2, wherein
the liquid crystal contains up to 1 percent of antistatic agent.

4. The liquid crystal display unit according to claim 2, wherein
a rubbing treatment is performed on each of the upper and lower transparent plates to align molecular orientations of the liquid crystal.

5. The liquid crystal display unit according to claim 1, wherein
the transparent electrode group includes:
an upper transparent electrode group;
an upper routing wire group, provided in the vicinity of the upper transparent electrode group and connected to the upper transparent electrode group;
a lower transparent electrode group; and
a lower routing wire group, provided in the vicinity of the lower transparent electrode group and connected to the lower transparent electrode group.

6. The liquid crystal display unit according to claim 5, wherein
at least one of the upper and lower routing wire groups are adjusted such that a routing wire of the routing wire groups is, irrespective of the length of the routing wire, approximately equal in resistance value to another routing wire.

7. The liquid crystal display unit according to claim 5, wherein
the upper and lower transparent electrode groups comprise transparent conductive films, formed at the transparent plate, and
the upper and lower routing wire groups comprise transparent conductive films, formed at the transparent plate, and metal films, laid on the transparent conductive films and providing lower resistances than the transparent conductive films.

8. The liquid crystal display unit according to claim 5, the liquid crystal display cell including a display electrode group arrayed in a grid pattern, wherein
the upper transparent electrode group and the lower transparent electrode group are each arrayed into stripes, and
the upper transparent electrode group is disposed orthogonally to the lower transparent electrode group in their planar positional relationship.

9. The liquid crystal display unit according to claim 8, wherein
upper transparent electrodes of the upper transparent electrode group each include rectangular upper detection electrodes disposed to the number corresponding to lower transparent electrodes of the lower transparent electrode group and spaced apart with a pitch corresponding to the lower transparent electrodes,
the lower transparent electrodes of the lower transparent electrode group each include rectangular lower detection electrodes disposed to the number corresponding to the upper transparent electrodes of the upper transparent electrode group and spaced apart with a pitch corresponding to the upper transparent electrodes, and
diagonals of the upper and lower detection electrodes are directed in the same direction as an array direction of the upper transparent electrode group or the lower transparent electrode group, and the upper and lower detection electrodes are sized so as not to overlap with one another.

10. The liquid crystal display unit according to claim 8, wherein
the upper and lower transparent electrode groups in the compensation cell are arranged not parallel to but at an angle to the display electrode group in the liquid crystal display cell in their mutual planar positional relationship.

11. The liquid crystal display unit according to claim 1, wherein
the transparent electrode group comprises a plurality of transparent electrode groups arranged in a grid pattern.

12. The liquid crystal display unit according to claim 3, wherein
the antistatic agent comprises quaternary amine.
